# EUROPÄISCHE PATENTSCHRIFT

(11) **EP 2 777 935 B1**
(45) Veröffentlichungstag und Bekanntmachung des Hinweises auf die Patenterteilung: **04.03.2020**
(21) Anmeldenummer: 14000930.9
(22) Anmeldetag: 14.03.2014
(51) Int. Cl.: B32B 37/04, E04F 15/10, B32B 5/02, B32B 37/22

(54) **Dämmplatte**
Insulation board
Plaque isolante

(30) Priorität: 15.03.2013 DE 102013004423
(43) Veröffentlichungstag der Anmeldung: 17.09.2014
(73) Patentinhaber: Watermann Polyworks GmbH, 32758 Detmold (DE)
(72) Erfinder: Watermann, Markus, 32760 Detmold (DE)
(74) Vertreter: Helwig, Hans-Martin

(56) Entgegenhaltungen:
- EP-A1- 2 463 092
- WO-A1-2008/049429
- DE-A1-102004 022 464
- US-A1- 2005 153 612
- US-A1- 2010 147 621

## Beschreibung

Die Erfindung betrifft ein Verfahren für die Herstellung einer Dämmplatte.

Dämmplatten, insbesondere auch schalldämmende, sind in vielfältigen Ausführungsformen bekannt und bewährt. Häufig ist jedoch die Trittschalldämmung aufgrund mangelhafter Schallentkopplung zwischen einem Boden und einem harten, insbesondere geklebten Bodenbelag wie Fliesen, Laminate oder dergleichen nicht von ausreichender Qualität. Effektiv trittschalldämmende Dämmplatten sind daher vergleichsweise materialstark und teuer.

Entsprechend sind die bekannten trittschalldämmenden Platten sehr speziell ausgebildet und anderweitig kaum verwendbar bzw. für eine anderweitige Verwertung zu teuer.

Die US 2005/0153612 A1 offenbart beispielsweise eine Isoliermatte aus Glasfasern, die unter der Einwirkung von Druck und Hitze mit einem unter Wärmeeinfluss vernetzenden Binder zu der Isoliermatte Verbunden werden.

Vor diesem Hintergrund macht die Erfindung es sich zur Aufgabe, eine Dämmplatte zur Verfügung zu stellen, die einfach und kostengünstig herstellbar ist, die vielfältig verwendbar ist und die bei vergleichsweise geringer Materialstärke Trittschall in hervorragender Weise dämmt.

Gelöst wird diese Problematik bei der Herstellung einer Dämmplatte gem. des Anspruchs 1 durch die Verfahrensschritte, dass ein Vlies in einer beheizten Presse verdichtet wird und dass in der Presse unter vollständiger Durchwärmung und teilweiser Aufschmelzung der Vliesfasern die Materialstärke des Vlieses reduziert wird, nämlich um die Hälfte oder mehr.

Das zu verpressende Vlies wird kostengünstig als Rollenware vorgehalten und einer Presse zugeführt, beispielsweise einer Kalanderpresse oder einer Doppelbandpresse, und kann das so erhaltene Material bei einer ausreichend geringen Materialstärke nach dem Durchlauf durch die Presse erneut aufgerollt werden.

Alternativ kann das so erhaltene Material auch sogleich zu bspw. einer für eine Schalldämmung verwendbaren Plattenware weiterverarbeitet werden.

Es ist dieses Material jedoch porös und saugt ein Lösungsmittel wie Wasser bspw. eines Fliesenklebers auf. Wenn dies nicht gewünscht wird, können die Oberflächen der Dämmplatte mit einem Haftgrund versehen werden, bspw. einem Primer, insbesondere werden aber die Oberflächen der Dämmplatte jeweils durch ein weiteres Vlies ausgebildet, wobei zwischen dem verpressten Vlies und den äußeren Vliesen noch für ein besseres Verhaften derselben weitere Kleberschichten oder Folienlagen vorgesehen werden können. Andere geeignete Kontaktschichten können anstelle solcher Vliese ebenso Verwendung finden.

Es ist vorgesehen, dass eine ein- oder beidseitige Kaschierung des verdichteten Vlieses mit Folien erfolgt, wobei vorzugsweise Kunststoffe sortenrein Verwendung finden. Weiter ist dabei vorgesehen, dass diese Kaschierung mit dem Verpressen des zu verdichtenden Vlieses erfolgen kann.

Sind die Folien wasserdicht, so kann das erhaltene Material auch bspw. als Wärmedämmplatte an Wänden Verwendung finden und zusätzlich eine Dampfsperre und/oder Abdichtung ausbilden.

Eine weitere beidseitige Kaschierung unter Druck und Wärme mit Vliesen führt dann zu einem vergleichsweise steifen Dämmmaterial, das zu auf Böden oder an Wänden verlegbaren Platten geschnitten werden kann.

Die so erhaltene Dämmplatte mit einem verpressten und verdichteten Vlies, das vorzugsweise beidseits ohne Bindemittel von zwei Folien eingefasst ist, die jeweils eine äußere Kaschierung mit einem weiteren Vlies aufweisen, ist kostengünstig in der Herstellung und sind ihre Wärme- und Trittschall dämmenden Eigenschaften von überraschend hoher Qualität, was an dem mittigen, verdichteten Vlies liegen wird.

Die äußere Kaschierung mit jeweils einem weiteren Vlies dient im Wesentlichen einem besseren Verhaften mit beispielsweise einem Kleber oder dergleichen.

Aufgrund der guten Hafteigenschaften von Klebern an der Dämmplatte nach der Erfindung ist deren Einsatz auch vertikal als Untergrund für Fliesen eines Wandbelages bspw. im sanitären Bereich sehr gut möglich.

Das Verdichten des Vlieses wird durch die Maßnahme gesteigert, dass in das Vlies zusätzliche Fasern geringeren Schmelzpunktes eingearbeitet sind, die aufschmelzen und die Fasern des Vlieses untereinander verhaften.

Das zu verdichtende Vlies und/oder die Schmelzfasern bestehen vorzugsweise aus Polypropylen und es ist insbesondere daran gedacht, eine sortenreine Dämmplatte herzustellen, die nach Verwendung auch einem Recycleprozess problemlos wieder zugeführt werden kann.

Das Gewicht des Vlieses beträgt bevorzugt zwischen 300 g/m² und 1500 g/m², was ausreichend für eine gute Schalldämmung ist, andererseits ein Handling der nach dem erfindungsgemäßen Verfahren hergestellten Dämmplatten nicht unnötig erschwert.

Bei dem Verfahren nach der Erfindung wird ein Vlies von einer Materialstärke zwischen 5 mm und 10 mm bevorzugt auf eine Materialstärke zwischen 2,5 mm und 5 mm reduziert, was bei einer Temperatur bei dem Verpressen zwischen 170°C und 200°C erfolgt.

Insbesondere bei Propylen erfolgt hierdurch eine ausreichende Verdichtung des Vlieses für eine gute Wärme- und Schalldämmung und erfolgt durch die erfindungsgemäße Dämmplatte insbesondere eine sehr gute Schallentkopplung zwischen einem Fußboden und insbesondere einem harten Fußbodenbelag oder zwischen einem Mauerwerk und bspw. einem Fliesenbelag.

Das Wesen der Erfindung wird anhand der Zeichnung näher erläutert, in der lediglich Ausführungsbeispiele schematisch und nicht maßstabsgerecht dargestellt sind.

In der Zeichnung zeigt:
- Figur 1:: einen Schnitt durch eine Dämmplatte nach der Erfindung und wird anhand der
- Fig. 2 und 3: das Herstellungsverfahren weiter erläutern.

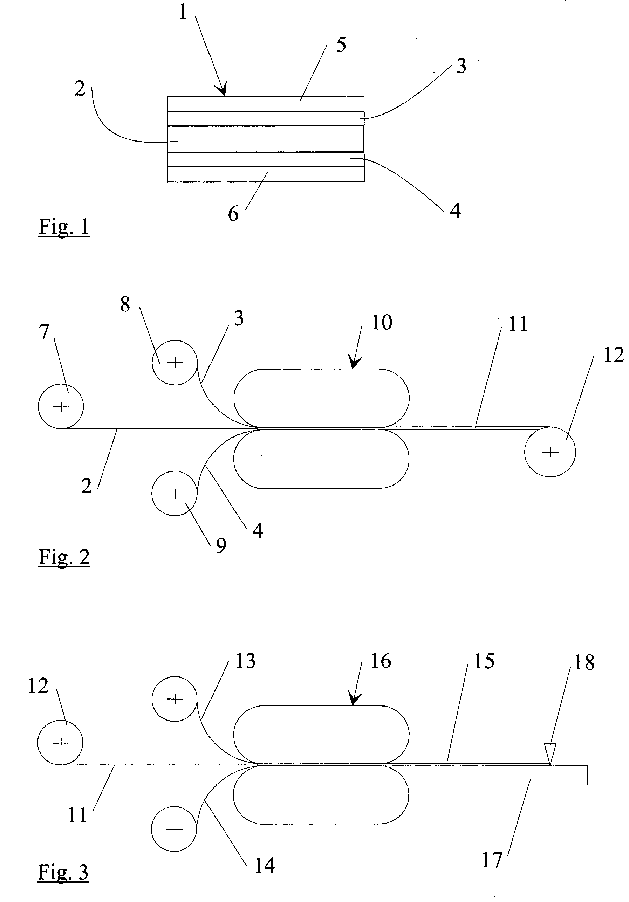

Der in der Materialstärke deutlich überhöhte Querschnitt durch eine erfindungsgemäße Dämmplatte 1 bevorzugter Art gem. Fig. 1 zeigt mittig ein verdichtetes Vlies 2, vorzugsweise aus einem Polypropylen, dessen ursprüngliche Materialstärke von 5 mm bis 10 mm auf eine Materialstärke zwischen 2,5 mm und 5 mm in einer Presse reduziert wurde. Ein solcherart verdichtetes Vlies 2 erfüllt bereits in erheblichen Maß eine schalldämmende Funktion und kann gegebenenfalls auch entsprechend Verwendung finden.

Bevorzugt erfolgt mit dem Verpressen bei Temperaturen zwischen 170° und 200° eine bindemittelfreie Kaschierung mit zwei weiteren Folien 3, 4, deren Äußeres nochmals mit jeweils einem Vlies 5, 6 als Haftgrund für einen Kleber kaschiert wurden.

Hergestellt wird eine derartige Dämmplatte gem. Fig. 1 , indem in einem ersten Verfahrensabschnitt gem. Fig. 2 das Vlies 2 unter Einfassung zweier Folien 3, 4 von Rollen 7-9 abgezogen hier beispielhaft einer Doppelbandpresse 10, alternativ einer Kalanderpresse, zugeführt wird. In der Presse 10 wird das Vlies 2 verdichtet, in der Materialstärke um mehr als die Hälfte reduziert und bindemittelfrei bei Temperaturen zwischen 170° und 200° mit den Folien 3, 4 kaschiert. Das so erhaltene Material 11 kann dann, bei ausreichend geringer Materialstärke, auf einer weiteren Rolle 12 aufgerollt zu werden.

In einem weiteren Verfahrensabschnitt gem. Fig. 3 wird das in dem Verfahrensabschnitt gem. Fig. 2 erhaltene Material 11 von der Rolle 12, eingefasst von zwei weiteren Vliesen 13, 14, unter Druck und Wärme erneut verpresst, um dann als fertige Wärme- oder Trittschall dämmende Bahn 15 die Presse 16 zu verlassen. Das dann vergleichsweise steife Material der Bahn 15 wird dann auf einem angedeuteten Tisch 17 zu Platten geschnitten, symbolisch durch ein Messer 18 angedeutet.

### Bezugszeichenliste:

- 1.: Schalldämmplatte
- 2.: Vlies
- 3.: Folie
- 4.: Folie
- 5.: Vlies
- 6.: Vlies
- 7.: Rolle
- 8.: Rolle
- 9.: Rolle
- 10.: Presse
- 11.: Material
- 12.: Rolle
- 13.: Vlies
- 14.: Vlies
- 15.: Bahn
- 16.: Presse
- 17.: Tisch
- 18.: Messer

## Patentansprüche

1. Verfahren für die Herstellung einer Schall- und Wärmedämmplatte (1), in besondere einer Trittschalldämmplatte,
**dadurch gekennzeichnet,**
**dass** ein Vlies (2) als Rollenware vorgehalten und einer beheizten Presse (10) zugeführt wird, dass das Vlies (2) in der Presse (10) verdichtet wird und dass in der Presse (10) unter vollständiger Durchwärmung und teilweiser Aufschmelzung der Vliesfasern die Materialstärke des Vlieses (2) um die Hälfte oder mehr reduziert wird, wobei mit dem Verpressen eine ein- oder beidseitige Kaschierung des verdichteten Vlieses (2) mit Folien (3,4) erfolgt.

2. Verfahren nach Anspruch 1, **dadurch gekennzeichnet, dass** die Oberflächen der Dämmplatte (1) mit einem Haftgrund für einen Kleber versehen sind.

3. Verfahren nach Anspruch 2, **dadurch gekennzeichnet, dass** der Haftgrund ein Vlies (13,14) ist.

4. Verfahren nach einem oder mehreren der vorangehenden Ansprüche,
**dadurch gekennzeichnet, dass** die Folien (3, 4) wasserdicht sind.

5. Verfahren nach einem oder mehreren der vorangehenden Ansprüche,
**dadurch gekennzeichnet, dass** in das Vlies (2) zusätzliche Fasern geringeren Schmelzpunktes eingearbeitet sind.

6. Verfahren nach einem oder mehreren der vorangehenden Ansprüche,
**dadurch gekennzeichnet, dass** das Vlies (2) und/oder die Schmelzfasern aus Propylen besteht.

7. Verfahren nach einem oder mehreren der vorangehenden Ansprüche,
**dadurch gekennzeichnet, dass** das Gewicht des Vlieses (2) zwischen 300 g/m² und 1500 g/m² beträgt.

8. Verfahren nach einem oder mehreren der vorangehenden Ansprüche,
**dadurch gekennzeichnet, dass** das Vlies (2) von einer Materialstärke zwischen 5 mm und 10 mm auf eine Materialstärke zwischen 2,5 mm und 5 mm reduziert wird.

9. Verfahren nach einem oder mehreren der vorangehenden Ansprüche,
**dadurch gekennzeichnet, dass** die Temperatur bei dem Verpressen zwischen 170°C und 200°C beträgt.

## Claims

1. Method for producing a sound and heat insulation board (1), in particular an impact sound insulation board, **characterized in that** a nonwoven fabric (2) is provided as rolled goods and fed to a heated press (10), that the nonwoven fabric (2) is compacted in the press (10), and that the material thickness of the nonwoven fabric (2) is reduced by half or more in the press (10) with complete through-heating and partial melting of the nonwoven fabric fibers, wherein pressing results in one-sided or two-sided lamination of the compacted nonwoven fabric (2) with films (3, 4).

2. Method according to claim 1, **characterized in that** the surfaces of the insulation board (1) are provided with an adhesive primer for an adhesive.

3. Method according to claim 2, **characterized in that** the adhesive primer is a nonwoven fabric (13, 14).

4. Method according to one or more of the preceding claims, **characterized in that** the films (3, 4) are waterproof.

5. Method according to one or more of the preceding claims, **characterized in that** additional fibers of lower melting point are incorporated into the nonwoven fabric (2).

6. Method according to one or more of the preceding claims, **characterized in that** the nonwoven fabric (2) and/or the melt fibers consist of propylene.

7. Method according to one or more of the preceding claims, **characterized in that** the weight of the nonwoven fabric (2) is between 300 g/m² and 1500 g/m².

8. Method according to one or more of the preceding claims, **characterized in that** the nonwoven fabric (2) is reduced from a material thickness between 5 mm and 10 mm to a material thickness between 2.5 mm and 5 mm.

9. Method according to one or more of the preceding claims, **characterized in that** the temperature during pressing is between 170°C and 200°C.

## Revendications

1. Procédé de fabrication d'un panneau d'isolation phonique et thermique (1), en particulier d'un panneau d'isolation phonique,
**caractérisé en ce que**
une nappe (2) est fournie sous forme de rouleau et acheminée vers une presse (10) chauffée, **en ce que** la nappe (2) est compactée dans la presse (10) et **en ce que** l'épaisseur de matériau de la nappe (2) est réduite de moitié ou davantage dans la presse (10) avec chauffage à cœur intégral et fusion partielle des fibres en nappe, dans lequel un couchage unilatéral ou bilatéral de la nappe (2) comprimée avec des films (3, 4) a lieu lors de la compression.

2. Procédé selon la revendication 1, **caractérisé en ce que** les surfaces du panneau d'isolation (1) sont munies d'une couche d'accrochage pour un adhésif.

3. Procédé selon la revendication 2, **caractérisé en ce que** la couche d'accrochage est une nappe (13,14).

4. Procédé selon une ou plusieurs des revendications précédentes, **caractérisé en ce que** les films (3, 4) sont imperméables.

5. Procédé selon une ou plusieurs des revendications précédentes, **caractérisé en ce que** des fibres supplémentaires présentant un point de fusion inférieur sont incorporées dans la nappe (2).

6. Procédé selon une ou plusieurs des revendications précédentes, **caractérisé en ce que** la nappe (2) et/ou les fibres fondues est/sont constituée(s) de propylène.

7. Procédé selon une ou plusieurs des revendications précédentes, **caractérisé en ce que** le poids de la nappe (2) est compris entre 300 g/m² et 1 500 g/m².

8. Procédé selon une ou plusieurs des revendications précédentes, **caractérisé en ce que** la nappe (2) est réduite d'une épaisseur de matériau comprise entre 5 mm et 10 mm à une épaisseur de matériau comprise entre 2,5 mm et 5 mm.

9. Procédé selon une ou plusieurs des revendications précédentes, **caractérisé en ce que** la température lors de la compression est comprise entre 170°C et 200°C.
